# EUROPÄISCHE PATENTSCHRIFT

(11) **EP 2 883 844 B1**
(45) Veröffentlichungstag und Bekanntmachung des Hinweises auf die Patenterteilung: **12.07.2017**
(21) Anmeldenummer: 13196968.5
(22) Anmeldetag: 12.12.2013
(51) Int. Cl.: C02F 1/44, B01D 61/14, F24D 17/00, C02F 1/02, C02F 1/28, C02F 1/32, C02F 103/42

(54) **VERFAHREN ZUR ENERGIESPARUNG IN EINEM SYSTEM ZUR WASSERBEREITSTELLUNG**
METHOD FOR SAVING ENERGY IN A WATER TREATMENT SYSTEM
PROCEDE D'ECONOMIE D'ENERGIE DANS UN SYSTEME DE PREPARATION D'EAU

(43) Veröffentlichungstag der Anmeldung: 17.06.2015
(73) Patentinhaber: EXERGENE Technologie GmbH, 22397 Hamburg (DE)
(72) Erfinder: Wermter, Carsten, 20149 Hamburg (DE); Puls, Norbert Jürgen, 22589 Hamburg (DE); Pramor, Horst, 22962 Siek (DE); Hartig, Uwe, 74357 Bönnigheim (DE)
(74) Vertreter: Stürken, Joachim

(56) Entgegenhaltungen:
- WO-A1-2014/096845
- DE-U1- 20 208 814
- DE-U1-202005 019 293
- DE-U1-202006 011 667
- DE-U1-202011 003 127
- US-A1- 2004 195 181

## Beschreibung

### Einleitung

Die Erfindung betrifft allgemein das Gebiet der Wasserbereitstellung. Insbesondere betrifft die Erfindung ein Verfahren zur wirksamen Energieeinsparung im Rahmen der Bereitstellung einer erwärmten Flüssigkeit für Sanitärzwecke unter Kontrolle der für Mikroorganismen empfohlenen, zulässigen oder akzeptablen Richtwerte.

### Stand der Technik und Nachteile

Einleitend sei angemerkt, dass sich die nachfolgenden Erläuterungen beispielhaft auf wässrige Flüssigkeiten wie insbesondere Wasser beziehen, grundsätzlich aber auch für andere Flüssigkeiten Gültigkeit besitzen.

Das für Betriebs-, Sanitär- und Trinkzwecke bereitgestellte Wasser unterliegt strengen Hygieneanforderungen, deren Einhaltung durch eine Vielzahl von Vorschriften geregelt und überwacht wird. Bei Verstoß gegen diese Vorschriften drohen, neben den gesundheitlichen Risiken für die Betroffenen, empfindliche Konsequenzen für die Verantwortlichen. Aus diesen Gründen müssen Vorkehrungen getroffen werden, um jederzeit eine ausreichend hohe Qualität des Wassers zu gewährleisten.

Im Wesentlichen bestehen zwei Wege, über welche Wasser, selbst wenn es zunächst in einwandfreier Form in ein Leitungssystem eingespeist wird, verunreinigt werden kann. Zum Einen können in diesem Leitungssystem unerwünschte Bestandteile wie insbesondere Mikroorganismen vorhanden sein, welche mit dem Wasser in Kontakt kommen und es somit verunreinigen. Typische Quellen können insbesondere die Wandungen der Rohrleitungen, aber auch Dichtungen, Pumpen, Ventile und dergleichen sein. Zum Anderen können sich im Rohrsystem, ausgehend von wenigen Keimen, die mit einer Flüssigkeit in das System eingespeist werden, unter günstigen Bedingungen zahlreiche Kolonien von Mikroorganismen entwickeln, welche sich im System frei schwimmend oder an einer Oberfläche fixiert als so genannte Biofilme manifestieren. Beispielhaft für Mikroorganismen seien hier Legionellen genannt, welche zu ernsthaften gesundheitlichen Problemen führen. Derartige Mikroorganismen können beispielsweise über die Nahrung aufgenommen werden. Speziell für Legionellen wird als Hauptinfektionsweg jedoch das Einatmen erregerhaltiger, lungengängiger Aerosole aus dem Warmwasserbereich angesehen. Somit stellen auch Duschen oder an der Entnahmestelle (Wasserhahn) entstehende Aerosole Gefahrenquellen dar. Dabei ist bekannt, dass sich solche Mikroorganismen ganz vorwiegend nur bei Stagnation, also in stehendem Wasser, oder aber auch innerhalb von zumindest vorübergehend geschlossenen Zirkulationsleitungssystemen vermehren, wohingegen sie in dauerhaft fließenden Rohrleitungen eines vergleichsweise offenen Systems nicht zum Problem werden. Da in der großtechnischen Wasseraufbereitung ein ständiges Strömen des Wasser der Normalfall ist, fokussiert sich die Erfindung insbesondere auf das Gebiet der entnahmenahen Rohr- oder Leitungssysteme, wie sie beispielsweise in Krankenhäusern, Schwimmbädern, Schulen, Turnhallen, Fitnesscentern, aber auch in Privathäusern anzutreffen sind.

Eine Methode zur Abtötung besagter Mikroorganismen besteht im Einsatz von ultraviolettem Licht (UV-Licht). Das hochenergetische Licht zerstört die Organismen, wobei die abgestorbenen Bestandteile weiterhin im Wasser vorhanden sind. Dies ist zum Einen aus hygienischen Gründen wenig akzeptabel, zum Anderen können aber selbst diese Bestandteile toxisch oder allergen wirken, solange sie im Wasser vorhanden sind und z. B. über die Nahrung inkorporiert werden. Ein weiteres Problem besteht in der möglichen gegenseitigen Abschattung der Mikroorganismen während der Bestrahlung, weshalb diese Maßnahme üblicherweise nicht zu einer vollständigen Abtötung aller Mikroorganismen führt. Ferner sind Sporen bildende Organismen zu berücksichtigen, deren Sporen einer Abtötung durch UV-Licht nicht immer zugänglich sind. Dieser Ansatz zur Reinhaltung von Betriebs-, Sanitär- und Trinkwasser ist daher nur durch ein mehrfaches Durchlaufen der Bestrahlungseinrichtung oder durch Vorsehen mehrerer sequenzieller Bestrahlungseinrichtungen zu vermeiden, was mit entsprechend hohem Zeit- und Energieaufwand einhergeht.

Eine andere Methode sieht die Erhitzung des Wassers vor, so dass die Organismen denaturiert werden. Hierfür notwendige Temperaturen betragen typischerweise mindestens 60 bis 70°C. Nachteilig hierbei sind wiederum das Vorhandensein der denaturierten Reststoffe im Wasser, und der hohe Energieaufwand, der zum Erhitzen des Wassers nötig ist. Für den Fall, dass das an einer Zapfstelle zu entnehmende Wasser (wieder) kalt sein soll, ist zudem häufig noch ein Wiederabkühlen desselben erforderlich, was abermals Energie erfordert.

Beiden Methoden gemein ist, dass die nachträgliche Desinfektion des Wassers aufwendig und somit teuer ist, und dass weitere Vorkehrungen getroffen werden müssen, um die abgetöteten Mikroorganismen aus dem Wasser zu entfernen, bevor es aus einer Zapfstelle entnommen wird.

Zur Entfernung von Partikeln bestimmter Größe können entsprechend fein ausgestaltete Filter eingesetzt werden. Besonders vorteilhaft sind so genannte Ultrafiltrationssysteme (UF-Systeme). Bei diesen strömt das verunreinigte Wasser typischerweise durch eine Vielzahl dünner Kapillaren, die seitliche Filteröffnungen definierter Größe aufweisen. Durch diese Öffnungen tritt nur das gereinigte Wasser aus, wohingegen das mit Verunreinigungen immer weiter angereicherte Wasser am Ende der Kapillare periodisch oder kontinuierlich einem Entsorgungsabfluss zugeführt wird. Das gereinigte Wasser aus den in einer Vielzahl vorhandenen Kapillaren wird hingegen zentral gesammelt und steht am Ausgang des Filters zur Verfügung. Dort kann es an einer Zapfstelle entnommen oder in ein Rohrsystem für sauberes Wasser eingeleitet werden. Ultrafiltrationssysteme sind sowohl zum Entfernen genannter Mikroorganismen als auch anderer Schweb- und Trübstoffe geeignet und bekannt. In Wasser lösliche Stoffe, wie z.B. gesundheitsschädliche Salze (ein- und zweiwertige Ionen), oder Giftstoffe wie z.B. Pflanzengifte oder Uran, sind allein mit UF-Techniken nicht handhabbar. Zwar können derartige Stoffe gut mit Umkehrosmosetechnik oder Elektro-Deionisation aus dem Wasser separiert werden; dies würde jedoch eine Veränderung der chemischen Zusammensetzung des Wassers für den menschlichen Bedarf bedeuten, was unerwünscht ist. Lediglich die so genannte "Nanofiltration", bei der mit deutlich kleineren Porengrößen als bei der ansonsten ähnlichen UF-Technik gearbeitet wird, bietet entsprechende Möglichkeiten.

Obwohl UF-Systeme im Vergleich zu Porenfiltern höhere Initialkosten verursachen, sind sie den Porenfiltern aufgrund der Möglichkeit ihrer vergleichsweise einfachen Reinigung zumindest mittelfristig überlegen.

Die Verwendung von UF-Systemen hat sich jedoch in solchen Situationen als problematisch erwiesen, in denen das mittels Ultrafiltration gereinigte Wasser dem Leitungssystem nicht unmittelbar entnommen wird, also zumindest vorübergehend nicht strömt. Wie bereits erwähnt, können sich in zirkulierendem oder stehendem kalten oder nicht ausreichend heißem Wasser Mikroorganismen bilden und im Zeitverlauf derartig akkumulieren, dass Besorgnis erregende Keimtiter erreicht werden.

Während dies für das noch in den Kapillaren befindliche Wasser unerheblich ist, führt eine Wiederbesiedelung des stromabwärts der UF-Einrichtung befindlichen Flüssigkeitsvolumens im Zeitraum seines Stillstandes zu einer Rekontamination, die unbedingt zu vermeiden ist. Durch die typischerweise sehr große Oberfläche derartiger Filtersysteme können katalytische Verkeimungen mit extrem hohen Grenzwertüberschreitungen auftreten. Zur Vermeidung dieses Problems werden die UF-Systeme regelmäßig mit chemischer Reinigungsflüssigkeit gespült und/oder zerlegt und mechanisch gesäubert. Beide Methoden sind nachteilig, da im einen Fall wiederum gesundheitsschädliche Substanzen ins Rohrsystem eingebracht werden, und im anderen Fall mit entsprechenden Ausfallzeiten zu rechnen ist.

Ein weiteres Problem betrifft die Möglichkeiten einer möglichst zeitnahen Feststellung einer unzulässigen Belastung durch unerwünschte Bestandteile wie insbesondere durch Mikroorganismen. Nach dem Stand der Technik kann nahezu jedes Gebäude von einer Kontamination beispielsweise durch Legionellen betroffen sein, ohne dass dieses durch die gängige Beprobungspraxis präventiv aufgedeckt werden könnte, da diese mit bis zu 10 Tagen einen deutlich zu langen Zeitraum in Anspruch nimmt.

Die EP 2 474 506 B1 der Anmelderin offenbart eine Lösung für das oben dargelegte Problem der Rekontamination eines zumindest vorübergehend strömungsfreien Flüssigkeitsvolumens, welches eine Ultrafiltrationseinheit bereits durchlaufen hat, durch Bereitstellung einer Bypass-Nebenleitung, über welche dieses Flüssigkeitsvolumen der Ultrafiltrationseinheit erneut zugeführt werden kann, wobei die Bypass-Nebenleitung eine weitere Ultrafiltrationseinheit umfasst. Durch Anwendung dieser technischen Lehre kann die Keimbelastung im fraglichen Leitungssystem erheblich reduziert, wenn nicht sogar vollständig eliminiert werden.

Die DE 20 2006 011 667 U1 offenbart eine Vorrichtung zur Minimierung des notwendigen Filterdurchflusses in kreislaufgefilterten Warmwassersystemen. Diese Vorrichtung enthält ein Mikrofilter im Kreislauf.

### Aufgabe der Erfindung und Lösung

Ausgehend von dem vorstehend dargelegten Lösungsansatz der Anmelderin gemäß EP 2 474 506 B1 besteht die Aufgabe der vorliegenden Erfindung in der Bereitstellung und Anwendung eines Systems zur Leitung einer Flüssigkeit im Kreislauf, mit welchem das Ziel einer wirksamen Kontrolle der Belastung einer im Kreislauf geführten Flüssigkeit mit Mikroorganismen einfacher und kostengünstiger realisiert werden kann.

Das System und das Verfahren sollen insbesondere sowohl für den Betrieb im Bereich öffentlicher Leitungsnetze wie z.B. im Schwimmbad, in Pflegeeinrichtungen oder in Sporthallen, als auch zur Verwendung im häuslichen Bereich öffentlicher oder privater Leitungsnetze geeignet sein.

Ferner soll die vorliegende Erfindung in der Lage sein, im Rahmen der Bereitstellung einer erwärmten Flüssigkeit für Sanitärzwecke einen signifikanten Beitrag zur Energieeinsparung leisten zu können.

Zudem sollen das System und das Verfahren unabhängig vom Belastungsgrad jederzeit in der Lage sein, für Mikroorganismen zulässige, empfohlene oder akzeptable Richtwerte einhalten zu können.

Die Aufgabe wird gelöst durch Bereitstellung eines Verfahrens zur Energieeinsparung im Rahmen der Bereitstellung einer erwärmten Flüssigkeit für Sanitärzwecke unter Verwendung eines speziellen Leitungssystems gemäß Hauptanspruch.

### Beschreibung

Nachfolgend wird zunächst das erfindungsgemäß verwendete System detailliert beschrieben.

Das erfindungsgemäß verwendete System zur Leitung einer erwärmten Flüssigkeit für Sanitärzwecke im Kreislauf (Zirkulationsleitung) und zur Kontrolle der Belastung der im Kreislauf geführten Flüssigkeit mit Mikroorganismen umfasst eine Zirkulationsleitung mit einem Zirkulationsmittel und jeweils mindestens einer Schnittstelle zur Einspeisung von Flüssigkeit in bzw. zur Entnahme von Flüssigkeit aus dem System, und eine einzige Ultrafiltrationseinheit zur mechanischen Abscheidung von Mikroorganismen, sowie eine Bypass-Leitung, in deren Verlauf die einzige Ultrafiltrationseinheit sowie ein Fördermittel angeordnet sind.

Als Mikroorganismen kommen insbesondere organische pathogene Feststoffe wie Viren, Bakterien, Pilze und Pilzsporen, sowie Bestandteile derselben in Betracht.

Das System betrifft demnach allgemein das Gebiet der Bereitstellung einer insbesondere wässrigen, im Kreislauf geführten Flüssigkeit, von der die Einhaltung (gesetzlich) zulässiger, empfohlener oder akzeptabler Grenzwerte gefordert wird. Da das Leitungssystem über mindestens eine Schnittstelle zur Entnahme von Flüssigkeit aus dem System verfügt, weist sie ferner mindestens eine Schnittstelle zur Einspeisung von Flüssigkeit in das System auf. Diese Schnittstelle kann beispielsweise eine Verbindung zum Hausanschluss für das Trinkwassernetz eines öffentlichen oder privaten Gebäudes für gewerbliche oder wohnwirtschaftliche Zwecke sein.

Um die im System befindliche Flüssigkeit im Kreislauf führen zu können, umfasst die Zirkulationsleitung mindestens ein Zirkulationsmittel wie z.B. eine für den Dauerbetrieb geeignete Pumpe, mit der sich grundsätzlich eine Strömungsrichtung vorgeben lässt.

Das beschriebene Leitungssystem stellt somit ein überwiegend geschlossenes System dar, welches lediglich vorübergehend, wie z.B. während eines Einspeisungs-, Entnahme- oder Wartungsvorganges, die Kriterien eines geschlossenen und nicht jenseits der Schnittstellen erweiterten Systems nicht erfüllt. Im Rahmen der vorliegenden Beschreibung wird diese (zeitlich) überwiegend geschlossene Zirkulationsleitung auch als Hauptstromleitung bezeichnet, in der die Flüssigkeit in einer vorgegebenen Strömungsrichtung zirkuliert.

Gegenüber der technischen Lehre der EP 2 474 506 B1 ist die Ultrafiltrationseinheit jedoch nicht in der Hauptstromleitung, sondern in einem weiteren Leitungsabschnitt angeordnet, der vorliegend als Bypass, Bypass-Leitung oder Nebenstromleitung bezeichnet wird. Auf der Basis der zur Erfindung geleisteten Anstrengungen, wie der vergleichenden Untersuchung zahlreicher Versuchsanordnungen, und erhaltenen Datensätzen zur jeweiligen Keimbelastung zeigte sich überraschend, dass eine zulässige, empfohlene oder akzeptable Belastung einer zur Entnahme bereitgestellten Flüssigkeit auch dann zuverlässig gewährleistet werden kann, wenn die Ultrafiltrationseinheit nicht in der Hauptstromleitung, sondern lediglich in der Nebenstromleitung (Bypass, Bypass-Leitung) angeordnet ist und nur zu bestimmten Zeiten, vorzugsweise bedarfsorientiert wie z.B. durch eine erhöhte Keimbelastung veranlasst, durchlaufen wird. Erfindungsgemäß umfasst die Bypass-Leitung ein Fördermittel wie z.B eine Pumpe, sowie bevorzugt Verbindungsstellen wie z.B. Ventile, mit deren Hilfe die Flüssigkeit des Hauptstroms in die Bypass-Leitung ein- und ausgeleitet oder aber an der Bypass-Leitung vorbeigeführt werden kann.

Da das in der EP 2 474 506 B1 diskutierte Problem einer unerwünschten Erhöhung des Keimtiters in zumindest zeitweise nicht strömenden Leitungsabschnitten stromabwärts einer Ultrafiltrationseinheit, wie es vorliegend im Leitungsabschnitt der Bypass-Leitung zwischen dem Ausgang der Ultrafiltrationseinheit und der Verbindung zur Zirkulationsleitung der Fall ist, fortbesteht, wird nach einer bevorzugten Ausführungsform vorgeschlagen, das in diesem Leitungsabschnitt der Bypass-Leitung befindliche Flüssigkeitsvolumen zumindest teilweise der Ultrafiltrationseinheit (wieder) zuzuführen. Demnach umfasst die Nebenstromleitung des erfindungsgemäß verwendeten Systems nach einer bevorzugten Ausführungsform einen vorliegend mit Sekundär-Bypass bezeichneten Leitungsabschnitt, über welchen der Leitungsabschnitt der Bypass-Leitung (Nebenstromleitung) zwischen dem Ausgang der Ultrafiltrationseinheit und der Verbindung zur Zirkulationsleitung mit dem Leitungsabschnitt der Bypass-Leitung zwischen der Verbindung zur Zirkulationsleitung und dem Eingang der Ultrafiltrationseinheit verbunden ist. Vorzugsweise umfasst auch dieser Sekundär-Bypass ein Fördermittel wie z.B. eine Pumpe sowie vorzugsweise ein Mittel zur Verhinderung des Rückflusses wie z.B. ein Rückschlagventil, wobei die Pumpe in entsprechender Ausstattung auch diese Funktion übernehmen kann. Weiterhin ist es bevorzugt, dass dieses Mittel zur Verhinderung des Rückflusses in Form einer weiteren Einrichtung zur mechanischen Abscheidung wie insbesondere durch eine weitere Ultrafiltrationseinheit (Sekundär-Ultrafiltrationseinheit) bereitgestellt wird. Vorzugsweise verfügt der Leitungsabschnitt der Nebenstromleitung (Primär-Bypass) stromabwärts der Primär-Ultrafiltrationseinheit zwischen dem Abgang des Sekundär-Bypasses und der Verbindung zur Zirkulationsleitung über ein Magnetventil, welches schließt, wenn der Primär-Bypass deaktiviert und der Sekundär-Bypass aktiviert werden. Ergänzend oder alternativ kann es bevorzugt sein, dass die Primär-Ultrafiltrationseinheit mittels zweier Ventile in der Bypass-Leitung von der Zirkulationsleitung getrennt werden kann, wobei die beiden Ventile zu diesem Zweck in Strömungsrichtung sowohl vor als auch nach der Primär-Ultrafiltrationseinheit angeordnet sind. Nach einer Fortbildung dieser Ausführungsform umfasst die Bypass-Leitung (mit oder ohne Sekundär-Ultrafiltrationseinheit) einen Sekundär-Bypass mit einem weiteren Ventil, wobei das Fördermittel der Nebenstromleitung, zumindest in diesem Fall, zwischen der Verbindung des Sekundär-Bypasses mit dem Primär-Bypass und der Primär-Ultrafiltrationseinheit angeordnet ist. Da die beiden zuvor erwähnten Ventile, in Strömungsrichtung der Nebenstromleitung gesehen, in der Nebenstromleitung sowohl stromaufwärts als auch stromabwärts des Sekundär-Bypasses angeordnet sind, kann die in der Primär-Ultrafiltrationseinheit befindliche Restflüssigkeit im (kleinen) Kreislauf über den Sekundär-Bypass der Primär-Ultrafiltrationseinheit erneut zugeführt werden, sofern die beiden Ventile der Nebenstromleitung geschlossen, das weitere Ventil im Sekundär-Bypass geöffnet und das Fördermittel in der Nebenstromleitung aktiviert werden. Der Vorteil dieser bevorzugten Ausführungsform liegt darin, dass ein Selbstreinigungsbetrieb der Primär-Ultrafiltrationseinheit unabhängig von möglichen Verunreinigungen aus der Zirkulationsleitung ermöglicht wird.

Um die Ultrafiltrationseinheit durch z.B. Spülen reinigen zu können, ist ihr bevorzugt ein Ablauf zur Ableitung von Spülflüssigkeit zugeordnet, was für die gegebenenfalls vorhandene Sekundär-Ultrafiltrationseinheit ebenfalls gilt.

Erfindungsgemäß umfasst das verwendete System ferner eine Einrichtung zur Erwärmung, durch welche die Zirkulationsleitung zur Erwärmung der in ihr geführten Flüssigkeit verläuft. Die Einrichtung zur Erwärmung dient der Bereitstellung einer erwärmten Flüssigkeit, die an der mindestens einen Entnahmestelle (z.B. einer Dusche) entnommen werden kann, und wird beispielsweise in Form eines Heizkessels, Wärmetauschers oder dergleichen bereitgestellt.

Wie bereits erwähnt, durchläuft die Flüssigkeit die Nebenstromleitung und damit die einzige Ultrafiltrationseinheit (vorliegend im Rahmen einer bevorzugten Ausführungsform auch als Primär-Ultrafiltrationseinheit bezeichnet) bevorzugt in einer bedarfsorientierten Art und Weise. Dies bedeutet, dass das System Beprobungsstellen oder Stellen zur Abnahme von Proben aufweist, sodass der Ist-Belastungszustand der zirkulierenden Flüssigkeit bezüglich anwesender Mikroorganismen möglichst zeitnah und bevorzugt in Echtzeit erfasst werden kann. Sollte sich der gemessene Keimtiter auf einen bestimmten, vorher festgelegten Grenzwert erhöht haben, könnte die Bypass-Leitung so lange geöffnet und die zirkulierende Flüssigkeit so lange bzw. so oft durch die Ultrafiltrationseinheit geführt werden, bis das Niveau des Keimtiters wieder auf einen vorher festgelegten Wert zurückgeführt worden ist. Im Hinblick auf die mögliche Schaffung eines automatischen Regelkreises, über den das Öffnen und Durchlaufen der Bypass-Leitung des erfindungsgemäß verwendeten Systems vorzugsweise in Echtzeit gesteuert werden kann, umfasst das System nach einer weiteren bevorzugten Ausführungsform mindestens ein diagnostisches Mittel zur qualitativen und/oder quantitativen Bestimmung von Mikroorganismen in der Flüssigkeit. Alternativ oder zusätzlich kann die Steuerung jedoch auch anhand empirischer Daten erfolgen. Beispielsweise hat sich nach Analyse der Messdaten einer erfindungsgemäß ausgebildeten Versuchsanlage gezeigt, dass es zur Kontrolle der Einhaltung gewünschter Belastungswerte ausreichen kann, die zirkulierende Flüssigkeit nach einer bestimmten Anzahl von Stunden wie z.B ein- oder zweimal am Tag durch die Ultrafiltrationseinheit zu führen.

Vorzugsweise ist das diagnostische Mittel stromaufwärts der mindestens einen Entnahmestelle angeordnet, wobei eine Anordnung in der Zirkulationsleitung zwischen dem Bypass und der Entnahmestelle besonders bevorzugt ist.

Derartige diagnostische Mittel können insbesondere mikrobiologische Testvorrichtungen umfassen, auf chromato-graphischer Basis arbeiten, und/oder molekulargenetische wie z.B Mikrochipgestützte Diagnosemethoden nutzen, um den Gehalt (Quantität) an und/oder die Bestimmung (qualitativ) von Mikroorganismen zu erfassen. Besonders bevorzugt kommen Laser-Partikel-Zähler oder auch selektive DNA-online-Analytiken zum Einsatz.

Die Ultrafiltrationseinheit (vorliegend auch mit "UF-Einheit" bezeichnet) arbeitet mechanisch, also beispielsweise mittels Poren, durch welche nur die Flüssigkeit hindurchtreten kann, die unerwünschten Mikroorganismen jedoch nicht. Wenngleich der Wortbestandteil "Ultra" typischerweise auf eine Abtrennung von Partikeln der Größe 0,1 bis 0,01 µm hindeutet (darunter wird oft von Nanofiltration, darüber von Mikrofiltration gesprochen), ist der konkrete Filtertyp und dessen Abscheidungsgrad von der jeweiligen Aufgabenstellung abhängig und kann durchaus auch die angrenzenden Gebiete der Filtration umfassen oder auf ihnen liegen. Die Porengröße beträgt bevorzugt 0,02 µm, so dass Molekülmassen von ca. 100 bis 150 kDa gefiltert werden. Aus der Verwendung einer mechanisch arbeitenden Einrichtung resultiert unter anderem auch eine vorteilhafte Reduzierung des Energieverbrauchs. Zudem werden auch bereits abgetötete Bestandteile von Mikroorganismen zuverlässig herausgefiltert, was üblicherweise unter alleiniger Anwendung von UV-Licht und/oder Erhitzung nicht der Fall ist.

Ultrafiltrationseinheiten sind hinlänglich aus dem Stand der Technik bekannt. Ihre Wirkungsweise beruht auf einer perforierten Membran, deren Poren nur Partikel bis zu einer bestimmten Größe passieren lassen. Größere Partikel werden von der Membran zurückgehalten. UF-Einheiten sind demnach den Oberflächenfiltern zuzurechnen, im Gegensatz zu Tiefenfiltern, wie beispielsweise Sand- oder Kiesfiltern. Eine bevorzugte Bauform einer UF-Einheit ist der Aufbau in einer Säule. Das Rohwasser wird der UF-Einheit über einen gemeinsamen Eingangsbereich zugeführt. Dieser verzweigt in die Innenräume einer Vielzahl dünner Röhren oder Hohlfasern mit einem typischen Innendurchmesser von lediglich 0,7 bis 2 mm, bevorzugt 1,5 mm, sowie einem typischen Außendurchmesser von ca. 6,0 mm. Sie weisen in ihren Wandungen besagte Poren auf, durch die das auch Filtrat genannte, gereinigte, also aufbereitete Wasser in einen Entnahmeraum abfließt. In diesem Entnahmeraum wird das Filtrat zusammengeführt und verlässt die UF-Einheit durch einen gemeinsamen Ausgangsbereich. Das je nach Anwendungsfall auszuwählende Material zeichnet sich dabei durch eine hohe Chemikalienbeständigkeit aus. Im Falle der Trinkwasseraufbereitung wird bevorzugt Polyethersulfon (kurz: PESU oder PES) als Material ausgewählt.

Bei der so genannten "Dead-End"-Technik wird das gesamte Rohwasser in Filtrat umgesetzt. Nach und nach sammeln sich jedoch immer mehr zurückgehaltene Partikel im Inneren der Filterröhren an. Um ein Zusammenbacken der Partikel und ein Verstopfen der Poren zu verhindern oder zumindest zu verringern, ist es vorteilhaft, wenn der relative Druckunterschied beiderseits der Membran gering ist. Als vorteilhaft hat sich ein Wert von weniger als 1 bar, beispielsweise 0,3 bar, erwiesen. Ein größerer Druckunterschied erbringt zwar theoretisch eine höhere Separationsrate, birgt jedoch auch ein höheres Risiko des Verstopfens der Poren, und benötigt deutlich mehr Energie.

Erfahrungen zeigen, dass mit einer technischen Auslegung, die einen Druckverlust bis ca. 0,3 bar im System zulässt, besonders gute und auch wirtschaftliche Ergebnisse erzielt werden.

Im Gegensatz dazu streicht bei der so genannten "Cross-Flow"-Technik laufend belastete Flüssigkeit an der einen Seite des Filters entlang, von der immer nur ein Teil der Flüssigkeit durch die Poren auf die Rein-Seite gelangt. Die übrige, leicht angereicherte Flüssigkeit kann dann zirkuliert und erneut am Filter entlanggeführt werden. Zwar tritt hier das Problem des Zusammenbackens nicht auf, nachteilig ist jedoch die geringe Separationsgeschwindigkeit bzw. die große Menge an umzuwälzendem belasteten Fluid.

Um die dauerhafte Betriebsfähigkeit des Filters zu gewährleisten, muss dieser periodisch regeneriert, also gereinigt bzw. entleert werden. Dazu weist der Filter häufig an demjenigen Ende der Säule, welches dem Eingangsbereich gegenüber liegt, einen Spülbereich auf, welcher in analoger Weise mit den allerdings gegenüberliegenden Enden der Innenräume der Röhren oder Hohlfasermembranen verbunden ist. Wird dieser Spülbereich geöffnet, strömt zumindest ein Teil der Flüssigkeit nicht durch die Poren, sondern spült das Partikelkonzentrat aus den Röhren in den Spülbereich, von wo aus es über einen Ablauf einer Entsorgung zugeführt werden kann. Je nach Anwendungsfall kann der Spülbereich temporär oder dauerhaft geöffnet sein, so dass nur ein bestimmter Prozentsatz des Rohwassers in Filtrat umgesetzt wird. Dementsprechend wechseln sich hier ggf. Dead-End- und Cross-Flow-Technik einander ab. Außerdem kann es vorteilhaft sein, wenn der Spülvorgang mit einer (temporären) Umkehr der Strömungsrichtung einhergeht.

Vorteilhaft an der UF-Technologie ist der im Verhältnis zu Technologien wie der Reinigung mittels UV-Licht oder durch Erhitzung deutlich geringere Energieverbrauch, sowie ein sicherer Betrieb auch bei einem Energieausfall. Mittels UF-Technologie kann Wasser rein mechanisch keimfrei gemacht werden. Durch entsprechend feine Poren können eingeschränkt sogar Medikamentenrückstände oder Schwermetalle aus dem Rohwasser entfernt werden, wobei dann korrekterweise eher von "Nanofiltration" gesprochen wird. Die UF-Technologie ist somit in der Lage, die hohen Anforderungen, die sich gerade im Hinblick auf die überarbeitete deutsche Trinkwasserverordnung ergeben, zu erfüllen und zu übertreffen, gemäß derer gerade auch der Einsatz von UF-Systemen zur Aufbereitung von Wasser für den menschlichen Gebrauch statthaft ist (vgl. "Liste der Aufbereitungsstoffe und Desinfektionsverfahren gemäß § 11 Trinkwasserverordnung 2001", Stand 2010).

Nach einer bevorzugten Ausführungsform ist die Bypass-Leitung mit der einzigen Ultrafiltrationseinheit unter Berücksichtigung der herrschenden Strömungsrichtung der zirkulierenden Flüssigkeit stromabwärts der mindestens einen Entnahmestelle angeordnet, sodass die Förderpumpe sowie die Ultrafiltrationseinheit im Bypass geringeren Durchsatzanforderungen genügen müssen, als wenn sie sich stromaufwärts der Entnahmestelle befinden würde. Hierdurch können weitere Kostenvorteile realisiert werden.

Die Pumpe als bevorzugtes Zirkulations- und/oder Fördermittel ist besonders bevorzugt ausgewählt aus der Gruppe bestehend aus Kreiselpumpen, Membranpumpen, Rotationskolbenpumpen, Impellerpumpen, Exzenterschneckenpumpen, Kolbenpumpen, Schlauch- oder Peristaltikpumpen, Schraubenspindelpumpen und Zahnriemenpumpen. Als Pumpentyp kommen besonders bevorzugt Pumpen des Typs "Kreiselpumpe" in Betracht. Kreiselpumpen sind beispielsweise als Radialpumpen, Diagonalpumpen und Axialpumpen verfügbar. Diese Pumpentypen sind insbesondere aufgrund ihrer Effizienz, ihrer Zuverlässigkeit, sowie der guten Verfügbarkeit bei konkurrenzfähigen Kosten geeignet.

Denkbar ist auch eine Verdrängung von Flüssigkeitsvolumina beispielsweise durch Patronen, die unter hohem Druck stehen, den sie an geeigneter Stelle im Leitungssystem abgeben und so zu einem Fördern der Flüssigkeit führen. Derartige Vorrichtungen sind insbesondere als Notlösungen sinnvoll, um z.B. auch im Falle eines Stromausfalls kurzfristig eine, wenn auch begrenzte, Menge an Förderenergie zur Verfügung zu stellen. Dabei ist sicherzustellen, dass ein möglicherweise entstehender Überdruck an anderer Stelle wieder abgebaut werden kann, da andernfalls kein ausreichendes Fördern von Flüssigkeit zu erwarten ist, da diese im Normalfall inkompressibel ist. Förderenergie dieses Typs kann ferner auch durch einen externen Anschluss erfolgen, durch den Flüssigkeit oder Gas unter entsprechendem Druck in das System eingebbar ist.

Im Rahmen einer weiteren bevorzugten Ausführungsform ist ferner vorgesehen, dass das erfindungsgemäß verwendete System mindestens eine Sicherung gegen Beschädigung oder Zerstörung der Ultrafiltrationseinheit umfasst. Druckstöße aufgrund schnell anlaufender Pumpen oder zu schnell schließender Magnetventile können zu sehr schnellen Druckanstiegen im System führen, wodurch die meist dünnwandigen Hohlfasermembranen beschädigt werden können. Auch scharfkantige Partikel wie beispielsweise Metallspäne, die mit dem Rohwasser mitschwimmen, können das Innere der UF-Einheit beschädigen. Gegen Druckspitzen sind bevorzugt Vorrichtungen zur schnellen Druckentlastung wie z.B. Sicherheitsventile vorzusehen, welche bevorzugt in der Bypass-Leitung vor der UF-Einheit angeordnet sind. Scharfkantige Partikel können durch entsprechend unempfindliche Grobfilter stromaufwärts der Bypass-Leitung aus dem Rohwasser herausgefiltert werden.

Nach einer weiteren Ausführungsform umfasst das System ferner Vorrichtungen, die aus der Gruppe bestehend aus Biosensoren, Trübungssensoren, Strömungssensoren, Drucksensoren, Sandfiltern, UV-Desinfektionseinheiten, Hitzebehandlungseinheiten, Beprobungsstellen, und Probenentnahmestellen ausgewählt sind.

Dabei umfasst das System vorzugsweise ferner einen Strömungs- und/oder Drucksensor zur Erfassung des Strömungszustands, und/oder einen Sensor zur Erfassung der Belastung der Flüssigkeit mit Mikroorganismen.

Unter Verwendung eines oder mehrerer den genannten Sensoren kann die oben bereits angesprochene zeitnahe Erfassung des Zustands des im System befindlichen Wassers erfolgen. Die Strömungs- oder Drucksensoren dienen der Erfassung des Strömungszustandes im System, so dass ein entsprechend vorzusehender Regelkreis bevorzugt selbsttätig für einen Betrieb des Zirkulations- und/oder Fördermittels sorgt, wenn die Entnahmestelle, optional seit einer vorbestimmbaren Zeitspanne, geschlossen ist. Die Filter dienen dem zusätzlichen Herausfiltern von groben Bestandteilen und/oder dem Herstellen einer zusätzlichen Sicherheit gegen das Auftreten mikrobiologischer Bestandteile, wozu auch die Hitzebehandlung einsetzbar ist. Die Beprobungsstelle und die Probenentnahmestelle(n) dienen beispielsweise dem "Impfen" des Rohwassers für Funktionstests der Sensorik, beispielsweise der manuellen Entnahme zur Durchführung von externen Untersuchungen des Wassers, um beispielsweise die Reinigungsfunktion der UF-Einheit zu verifizieren.

Nachfolgend wird das erfindungsgemäße Verfahren detailliert beschrieben. Dabei wird aus Gründen der Übersichtlichkeit auf eine Wiederholung der bereits im Rahmen des erfindungsgemäß verwendeten Systems dargestellten Sachverhalte verzichtet.

Demgemäß betrifft die Erfindung ein Verfahren zur Energieeinsparung im Rahmen der Bereitstellung einer erwärmten Flüssigkeit für Sanitärzwecke unter Kontrolle und Einhaltung der für Mikroorganismen zulässigen, empfohlenen oder akzeptablen Richtwerte unter Verwendung eines mit Ausnahme eines vorübergehenden Einspeisungs-, Entnahme- oder Wartungsvorganges geschlossenen Leitungssystems, welches eine Zirkulationsleitung mit einem Zirkulationsmittel und jeweils mindestens einer Schnittstelle zur Einspeisung von Flüssigkeit in bzw. zur Entnahme von Flüssigkeit aus dem System, eine einzige Ultrafiltrationseinheit zur mechanischen Abscheidung von Mikroorganismen, und eine Bypass-Leitung, in deren Verlauf die einzige Ultrafiltrationseinheit sowie ein Fördermittel angeordnet sind, umfasst, wobei die Kontrolle und Einhaltung der Richtwerte erfolgt, indem die in der Zirkulationsleitung geführte Flüssigkeit zumindest teilweise und zumindest zeitweise der in der Bypass-Leitung angeordneten Ultrafiltrationseinheit zugeführt wird. Ferner umfasst ist eine Einrichtung zur Erwärmung, durch welche die Zirkulationsleitung zur Erwärmung der in ihr geführten Flüssigkeit verläuft.

Dabei ist es bevorzugt, dass die in der Zirkulationsleitung vorhandene, belastete Flüssigkeit der Ultrafiltrationseinheit über die Bypass-Leitung kontinuierlich oder diskontinuierlich zugeführt wird. Eine kontinuierliche Zuführung ist dann zu bevorzugen, wenn schon bei sehr kurzzeitiger Zirkulation des Wassers mit einer Kontamination der Flüssigkeit zu rechnen ist, wenn eine kontinuierliche Überprüfung des entsprechenden Volumens notwendig ist, wie es beispielsweise in Krankenhäusern der Fall sein kann, oder wenn die durch das Zirkulations- und/oder Fördermittel erreichbaren Strömungsgeschwindigkeiten sehr gering sind. Gewöhnlich wird jedoch eine diskontinuierliche Zuführung ausreichen, in deren Rahmen bevorzugt eine periodische Bestimmung des Gehalts an und/oder der Qualität von Mikroorganismen erfolgt. Nur im Falle des Überschreitens eines Grenzwertes wird das für die Bypass-Leitung vorgesehene Fördermittel für einen längeren Zeitraum in Betrieb genommen, um für eine gewünschte Reinigung des kontaminierten Wassers zu sorgen.

Wie bereits erwähnt ist bevorzugt, dass kontinuierlich oder diskontinuierlich eine quantitative und/oder qualitative Messung von Mikroorganismen in der Flüssigkeit erfolgt. Die Anordnung der Messtechnik erfolgt jeweils Anwender- und Anlagenspezifisch. Gemessen wird vorzugsweise der genetische Fingerabdruck der Mikrobiologie. Durch optionale Einspielung geeigneter Sequenzen kann über die Messeinrichtung das Verhalten des Systems beobachtet und dokumentiert werden. Die hierzu notwendige Entnahme von Proben, und somit die Position des Messpunkts, sollte bevorzugt zwischen dem reinwasserseitigen Ende der Ultrafiltrationseinheit im Bypass und der mindestens einen Entnahmestelle liegen. Dabei ist besonders bevorzugt, dass die Messung periodisch, programmgesteuert oder bedarfsgesteuert erfolgt. Die periodische Messung wird demnach in vorbestimmten Zeitintervallen durchgeführt, während die programmgesteuerte Messung zu vorbestimmten Zeitpunkten erfolgt. Wie bereits zuvor ausgeführt, erfolgt die bedarfsorientierte Messung beispielsweise nur dann, wenn ein definierter Zustand (z.B. beschleunigte Vermehrung von Mikroorganismen aufgrund von Erwärmung) vorliegt, welcher eine Erhöhung der Kontamination wahrscheinlich macht.

Im Hinblick auf eine bedarfsorientierte Messung ist es besonders bevorzugt, dass die Zuführung der Flüssigkeit aus der Zirkulationsleitung über die Bypass-Leitung in die Ultrafiltrationseinheit in Abhängigkeit der erhaltenen Messdaten erfolgt. Mit anderen Worten wird ein das Fördermittel und Sensoren umfassender Regelkreis etabliert, welcher selbsttätig eine Messung des Gehalts an Mikroorganismen durchführt, je nach Messergebnis den beschriebenen Förderkreislauf durch den Bypass in Gang setzt, und, bei Unterschreiten des jeweiligen Grenzwertes, auch wieder anhält. Es ist klar, dass alternativ oder zusätzlich auch eine manuelle Steuerung dieses Vorgangs möglich sein sollte, und dass ferner durch die Steuerung bevorzugt ein Protokoll angefertigt wird, welches beispielsweise von einem Bediener ausgelesen oder zu Dokumentationszwecken aufbewahrt werden kann.

Nach einer weiteren Ausführungsform umfasst das Verfahren ferner einen Reinigungsschritt zum Entfernen von zurückgehaltenen Bestandteilen wie insbesondere Mikroorganismen aus der Ultrafiltrationseinheit. Ggf. wird dazu Reinigungsmittel stromaufwärts vom Bypass in das System eingespeist, während die Flüssigkeit ggf. zusammen mit dem Reinigungsmittel nach dem Passieren der UF-Einheit besonders bevorzugt über einen Ablauf in einen Spülbereich abfließt, von wo aus sie entsorgt werden kann, anstatt in den stromabwärts der Bypass-Leitung gelegenen Bereich der Zirkulationsleitung zu fließen.

Wie bereits zuvor ausgeführt, umfasst das erfindungsgemäß verwendete System nach einer bevorzugten Ausführungsform im Verlauf der Nebenstromleitung (Primär-Bypass) einen mit Sekundär-Bypass bezeichneten Leitungsabschnitt, über den die Flüssigkeit der Nebenstromleitung zwischen dem Ausgang der Ultrafiltrationseinheit (vorliegend auch als Primär-Ultrafiltrationseinheit bezeichnet) und der Verbindung zur Zirkulationsleitung der besagten Ultrafiltrationseinheit erneut zugeführt werden kann. Vorzugsweise sind in diesem Sekundär-Bypass ein weiteres Fördermittel wie z.B. eine Pumpe sowie ein Rückflussverhinderungsmittel wie z.B. ein Rückschlagventil angeordnet, wobei das Fördermittel besonders bevorzugt die Funktion des Rückflussverhinderungsmittels einschließt. Am meisten bevorzugt weist der Sekundär-Bypass ein Fördermittel sowie eine weitere, gegebenenfalls kleiner dimensionierte, Ultrafiltrationseinheit auf, welche vorliegend als Sekundär-Ultrafiltrationseinheit bezeichnet wird. Vorzugsweise sollte der Sekundär-Bypass durch Aktivierung des in diesem Leitungsabschnitt angeordneten Fördermittels immer dann erfolgen, wenn das Fördermittel im Primär-Bypass nicht aktiviert ist und die in der Nebenstromleitung befindliche Flüssigkeit folglich im Wesentlichen nicht strömt. Ein dauerhafter Betrieb des Sekundär-Bypasses bei nicht aktiviertem Fördermittel der Nebenstromleitung (des Primär-Bypasses) ist jedoch nur erforderlich, sofern dies durch entsprechende Keimtiter angezeigt erscheint. Ansonsten kann das Fördermittel des Sekundär-Bypasses auch nur zeitweise wie z.B. periodisch oder zu vorgegebenen Zeiten aktiviert werden. Vorzugsweise verfügt der Leitungsabschnitt der Nebenstromleitung (Primär-Bypass) stromabwärts der Primär-Ultrafiltrationseinheit zwischen dem Abgang des Sekundär-Bypasses und der Verbindung zur Zirkulationsleitung über ein Magnetventil, welches schließt, wenn der Primär-Bypass deaktiviert und der Sekundär-Bypass aktiviert werden.

Wie bereits zuvor ausgeführt worden ist, umfasst das erfindungsgemäß verwendete System eine Einrichtung zur Erwärmung, durch welche die Zirkulationsleitung verläuft, sodass das Verfahren auf die Bereitstellung einer erwärmten Flüssigkeit gerichtet ist.

Somit wird erfindungsgemäß ein Verfahren zur Energieeinsparung im Rahmen der Bereitstellung einer erwärmten Flüssigkeit für Sanitärzwecke unter Kontrolle der für Mikroorganismen zulässigen, empfohlenen oder akzeptablen Richtwerte bereitgestellt. Im Rahmen dieser Anwendung wird ein Leitungssystems verwendet, welches eine Zirkulationsleitung mit einem Zirkulationsmittel und jeweils mindestens einer Schnittstelle zur Einspeisung von Flüssigkeit in bzw. zur Entnahme von Flüssigkeit aus dem System, eine einzige Ultrafiltrationseinheit zur mechanischen Abscheidung von Mikroorganismen, und eine Bypass-Leitung, in deren Verlauf die einzige Ultrafiltrationseinheit sowie ein Fördermittel angeordnet sind, sowie eine Einrichtung zur Erwärmung, durch welche die Zirkulationsleitung zur Erwärmung der in ihr geführten Flüssigkeit verläuft, umfasst. Aufgrund der vorliegend beschriebenen Erkenntnisse und der Vorteile, die unter Anwendung des beschriebenen Systems erzielt werden können, resultiert die Energieeinsparung daraus, dass die Soll-Temperatur für die Einrichtung zur Erwärmung auf einen Wert zwischen 40 und 55°C, bevorzugt auf einen Wert zwischen 43 und 48°C eingestellt wird. Betrachtet man die erfindungsgemäß ermöglichte Absenkung der Soll-Temperatur im Vergleich zu üblichen Norm- oder Richtwerten (mindestens 60°C) um einen Betrag um ca. 15°C, ergeben sich enorme Möglichkeiten der Energieeinsparung. Berücksichtigt man zusätzlich die Vielzahl an erfindungsgemäß zu verbessernden Sanitärinstallationen in öffentlicher und privater Hand, könnten allein bezogen auf Deutschland etliche Terrawattstunden an Energie jährlich eingespart werden.

Aufgrund der einfach gestalteten und unproblematisch zu wartenden Komponenten sind System und Verfahren sowohl für den Betrieb im Bereich öffentlicher Leitungsnetze als auch zur Verwendung im häuslichen Bereich privater Leitungsnetze sowie in mobilen Systemen geeignet.

Aufgrund der einfachen Kombinierbarkeit des erfindungsgemäß verwendeten Systems mit entsprechender Sensorik kann die Reaktionszeit zwischen dem Auftreten einer unerwünschten Kontamination und ihrer Beseitigung deutlich verkürzt werden.

### Figurenbeschreibung

- Figur 1: zeigt ein Leitungssystem nach dem Stand der Technik.
- Figur 2: zeigt ein erfindungsgemäß verwendetes System nach einer ersten Ausführungsform.
- Figur 3: zeigt eine zweite Ausführungsform des erfindungsgemäß verwendeten Systems.

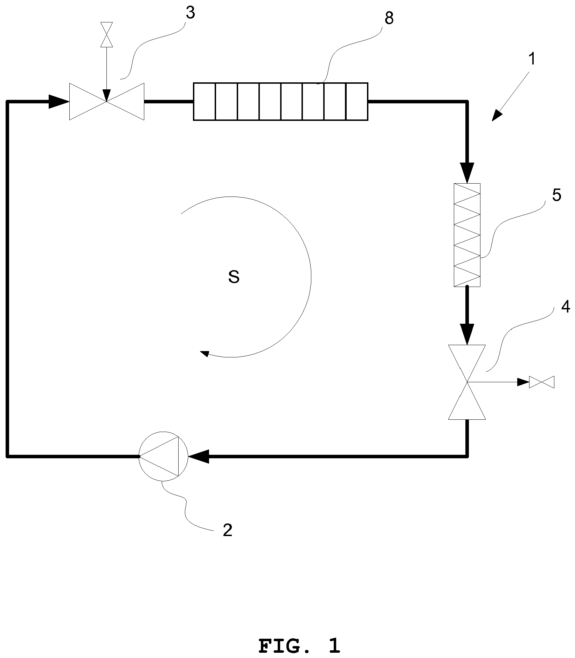

In der **Figur 1** ist ein Leitungssystem dargestellt, wie es aus dem Stand der Technik bekannt ist. Durch eine Einspeisestelle 3 kann Flüssigkeit wie beispielsweise Wasser in die Zirkulationsleitung 1 des Systems eingegeben werden. Durch Aktivierung des Zirkulationsmittels 2 fließt die Flüssigkeit in Strömungsrichtung S und passiert eine Einrichtung zur mechanischen Abtrennung von insbesondere Mikroorganismen wie eine Ultrafiltrationseinheit 5, sodass an einer Entnahmestelle 4, welche sich stromabwärts der Einspeisestelle 3 befindet, gereinigte Flüssigkeit entnommen werden kann. Sofern die Flüssigkeit an der Entnahmestelle 4 erwärmt oder gekühlt bereitgestellt werden soll, durchläuft die Zirkulationsleitung 1 eine geeignete Einrichtung zur Erwärmung oder Kühlung 8.

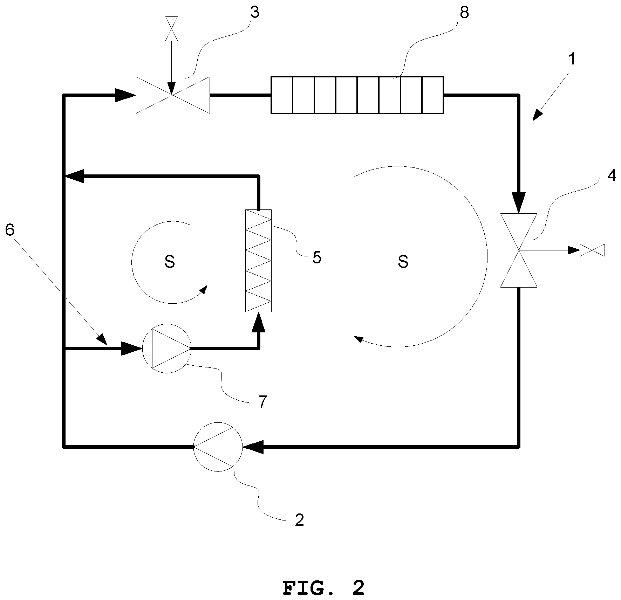

Die **Figur 2** zeigt ein erfindungsgemäß verwendetes Leitungssystem, bei dem die Ultrafiltrationseinheit 5 nicht im Hauptstrom der Zirkulationsleitung 1, sondern im Nebenstrom einer Bypass-Leitung 6 angeordnet ist. Obwohl die Bypass-Leitung 6 bevorzugt stromabwärts der Entnahmestelle 4 und somit zwischen der Entnahmestelle 4 und der Einspeisestelle 3 angeordnet ist, kann sich der Bypass auch an einem beliebigen anderen Abschnitt der Zirkulationsleitung 1 befinden. Der Bypass umfasst in Strömungsrichtung S eine Bypass-Leitung 6, ein Fördermittel 7, sowie die Ultrafiltrationseinheit 5. Wie bereits im Zusammenhang mit der Figur 1 ausgeführt worden ist, durchläuft die Zirkulationsleitung 1 eine Einrichtung zur Erwärmung 8, wobei diese Einrichtung grundsätzlich in jedem Abschnitt bzw. an jeder Stelle der Zirkulationsleitung 1 wie beispielsweise im Bereich der Einspeisestelle 3 angeordnet sein kann.

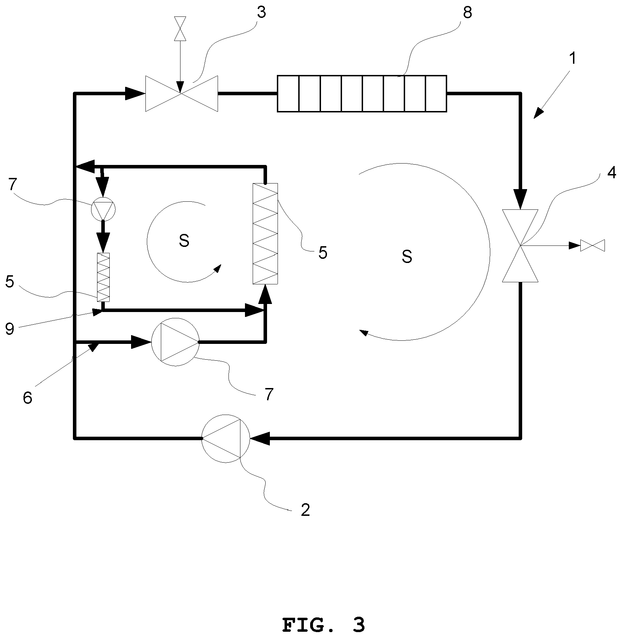

Die **Figur 3** zeigt eine bevorzugte Ausführungsform des erfindungsgemäß verwendeten Leitungssystems gemäß Figur 2, bei welcher innerhalb des Bypasses (Primär-Bypasses) 6 ein Sekundär-Bypass 9 angeordnet ist. Dieser Sekundär-Bypass 9 umfasst in Strömungsrichtung S ein Fördermittel 7 sowie eine weitere Ultrafiltrationseinheit (Sekundär-UF) 5. Unter Anwendung dieser Ausführungsform kann das Flüssigkeitsvolumen, welches sich in der Bypass-Leitung 6 stromabwärts der Ultrafiltrationseinheit (Primär-UF) 5 befindet, dieser Ultrafiltrationseinheit 5 über den Sekundär-Bypass 9 mit seiner weiteren Ultrafiltrationseinheit (Sekundär-UF) 5 zumindest teilweise erneut zugeführt werden. Bereits gereinigte, jedoch aufgrund Stagnation in der Bypass-Leitung 6 rekontaminierte Flüssigkeit kann so der Ultrafiltrationseinheit 5 der Nebenstromleitung 6 wieder zugeführt werden, wo sie einer erneuten Reinigung unterzogen wird, anstatt im rekontaminierten Zustand in die Zirkulationsleitung 1 eingespeist zu werden. Es ist dabei klar, dass die Verbindung zwischen der Bypass-Leitung 6 stromabwärts der Ultrafiltrationseinheit 5 und dem Sekundär-Bypass 9 prinzipiell beliebig positioniert sein kann, dass es jedoch vorteilhaft ist, wenn sie sich möglichst nahe an der Verbindung zur Zirkulationsleitung 1 befindet. Es ist außerdem klar, dass die Stelle, an welcher eine Einspeisung aus dem Sekundär-Bypass 9 in die Bypass-Leitung 6 bzw. in die Ultrafiltrationseinheit 5 erfolgt, variabel ist. So kann sie auch im Bereich stromaufwärts des Fördermittels 7 der Bypass-Leitung 6 liegen. Es ist jedoch vorteilhaft, die Lage in etwa wie in der Figur 3 dargestellt zu wählen, da auf diese Weise die Menge der rückgeführten Flüssigkeit minimiert wird, ohne die erfindungsgemäß bevorzugte Funktion zu beeinträchtigen.

Es ist klar, dass das erfindungsgemäß verwendete System noch weitere Komponenten wie insbesondere Spülanschlüsse für die Ultrafiltrationseinheit(en) 5, Beprobungsstellen, Entnahmestellen, Sensoren, Regelungseinrichtungen, Ventile etc. aufweisen kann, die jedoch aus Gründen der Übersichtlichkeit nicht dargestellt sind. Hierzu wird auf die vorstehende Beschreibung verwiesen, wo entsprechende detaillierte Informationen dargelegt sind.

### Ausführungsbeispiel

Nachfolgend wird ein Ausführungsbeispiel zur Illustration der Funktionstüchtigkeit der erfindungsgemäßen Lehre gegeben. Es basiert auf Experimenten, die im Rahmen eines wissenschaftlichen Forschungsprojektes im Vorfeld der Anmeldung durchgeführt wurden. Ein Teil dieser Experimente wurde bereits in der Voranmeldung der Anmelder detailliert beschrieben und zwischenzeitlich veröffentlicht (EP 2 474 506 B1).

Die Besiedelung von Lebensräumen in technischen Systemen wie Rohrleitungen und Armaturen durch Mikroorganismen ist ein natürlicher Prozess. Prinzipiell können zwei Strategien zur Entfernung von Bakterien und Viren aus Trinkwasser (Hygienisierung) verfolgt werden:
A. Vollständige (100%ige) Beseitigung vorhandener Verkeimungen
B. Reduktion vorhandener Verkeimungen bei Einhaltung bestehender zulässiger Grenzwerte.

Eine dauerhafte Beseitigung von vagabundierenden Verkeimungen innerhalb von Rohrnetzen oder von Biofilmen auf deren Oberflächen kann zwar durch chemische bzw. physikalische Verfahren erfolgen, jedoch wird der Erfolg nur von kurzer Dauer sein, denn unbesiedelte Lebensräume gibt es in der Natur grundsätzlich nicht. Darüber hinaus sind den Einsatzmöglichkeiten dieser Verfahren durch gesetzliche Einschränkungen enge Grenzen gesetzt.

Bei der Reduktion von vorhandenen Verkeimungen kommt es darauf an, dass unvermeidbar vorhandene Verkeimungen den gesetzlichen Bestimmungen entsprechend reduziert werden, damit sie keine gesundheitlichen Risiken auslösen können. Es gibt jedoch keine gesetzliche Norm, wonach in Wohngebäuden steriles Trinkwasser bereit gestellt werden muss.

Zu Beginn der Forschungstätigkeit wurde Strategie A zur vollständigen Beseitigung vorhandener Verkeimungen verfolgt. In das Trinkwassernetz einer neu errichteten Sporthalle wurde an der Hauseinspeisung eine UF-Membrananlage installiert, um es vollständig gegen äußere mikrobiologische Einflüsse abzuschotten. Eine im direkten Volumenstrom der Warmwasserzirkulation installierte UF-Membran sollte unvermeidlich vorhandene Bakterien und Viren innerhalb des Rohrnetzes des Gebäudes abfangen und beseitigen.

Es zeigte sich, dass Membranoberflächen unter den Betriebsbedingungen, die typischerweise in Gebäuden vorherrschen (Stagnation, Temperaturen höher als 20°C) zur Verkeimung neigen. Gemäß Lehre der EP 2 474 506 B1 konnte die sich hieraus ergebende Problematik eindrucksvoll gelöst werden, indem die (vorübergehend ruhende) Flüssigkeit im Leitungsabschnitt stromabwärts einer im Hauptstrom angeordneten Ultrafiltrationseinheit, d.h. zwischen dem Ausgang dieser Einheit und einer Entnahmestelle, zumindest teilweise dieser Einheit über einen Bypass erneut zugeführt wurde, wobei sich in diesem Bypass eine weitere Ultrafiltrationseinheit befand.

Die Umsetzung der Lehre der EP 2 474 506 B1 lieferte zwar ausgezeichnete Ergebnisse, gestaltete sich aufgrund der erforderlichen Installationen jedoch als aufwendig und daher kostenintensiv.

Es zeigte sich bei den weiteren Forschungsaktivitäten, dass die Wasserqualität der kommunalen Wasserversorgung zweier Bundesländer (Schleswig-Holstein und Hamburg) verlässlich den gesetzlichen Anforderungen genügte und nur geringe Verkeimungspotenziale in Gebäudenetzen eingebracht wurden.

Gleichzeitig wurde erkannt, dass eine dauerhafte Hygienisierung von Rohrnetzen nur gelingen kann, wenn sowohl Kalt- aus auch Warmwasser behandelt würden und nur geringe Errichtungs- und Betriebskosten entstünden. Das Einsatzspektrum der Membrantechnologie wurde daher auch auf Kaltwassernetze ausgeweitet.

Darauf aufbauend wurde im Rahmen der vorliegenden Erfindung eine Reduktionsstrategie entwickelt, welche auf eine vollständige Beseitigung von Verkeimungen verzichtet und durch eine geeignete Kombination von Pumpentechnik, Membranfiltration und Regelung für eine schonende Abscheidung von Bakterien und Viren aus Rohrnetzen innerhalb zulässiger Grenzwerte sorgt.

In einer Vielzahl von Labor- und Feldversuchen wurde die Anlagentechnik soweit entwickelt, dass der Einsatz der Membrananlage nicht mehr im zirkulierenden Vollvolumenstrom erforderlich ist, sondern in einem Bypass erfolgt. Dabei durchströmt gewöhnlich nur ein Teil des im Rohrnetz befindlichen Trinkwasservolumens die Membranfiltrationsanlage.

Durch bedarfsgerechte Programmierung der Betriebszeiten der Membrananlage gelingt die Reduktion von Verkeimung bis an die technische Nachweisgrenze. Es wurde beobachtet, dass die Verkeimung von Membranoberflächen in zirkulierenden Rohrnetzen infolge von Stagnation durch bestimmte Konstruktionsprinzipien und Betriebsweisen verhindert werden kann, ohne dass es der Lehre der EP 2 474 506 B1 bedarf.

Beim Einsatz von Membrananlagen im Vollvolumenstrom (Strategie A; EP 2 474 506 B1) hängt die Filteroberfläche vom erforderlichen Durchsatz infolge des Spitzenvolumenstroms eines Rohrnetzes ab. Daher ist für jeden Einsatzort die spezifische Auslegung und Konstruktion von Membrananlagen erforderlich.

Dagegen sind bei Bypassausführungen (Strategie B gemäß vorliegender Erfindung) standardisierte Filtrationsanlagen möglich, deren Leistungen von variabel programmierbaren Betriebsdauern abhängen. Aufgrund der erheblichen technischen Vereinfachung können derartige Membrananlagen zu vergleichsweise geringen Kosten hergestellt und betrieben werden.

Im Zusammenhang mit der Frage des strategischen Ansatzes zur Hygienisierung sind auch energetische Aspekte zu betrachten.

Nach dem Stand der Technik ist eine dauerhafte Hygienisierung von Trinkwasser nur durch thermische Behandlung mit Temperaturen oberhalb von 60°C möglich. Dieses Temperaturniveau konterkariert die Bemühungen um Energieeffizienzsteigerungen und den Einsatz regenerativer Energieträger erheblich.

Im Rahmen der zur vorliegenden Erfindung durchgeführten Untersuchungen konnte nachgewiesen werden, dass UF-Membrananlagen vollständig temperaturunabhängig bis zur Nachweisgrenze hygienisiert werden können. Insbesondere wurde festgestellt, dass eine gegebenenfalls vorhandene Verkeimung unter Anwendung des erfindungsgemäßen Systems auch unter Absenkung der Temperatur des zirkulierenden Wassers auf 56 oder sogar auf 51°C zu jeder Zeit an der mikrobiologischen Nachweisgrenze und somit deutlich unterhalb des gesetzlichen Grenzwertes gehalten werden konnte. Die durch die Temperaturabsenkung um ca. 10°C gegenüber der allgemein geforderten Mindesttemperatur von 60°C erzielbare Energieeinsparung ist beachtlich und eröffnet bezogen auf die Vielzahl existierender Haushalte und Installationen im öffentlichen Bereich ungeahnte Möglichkeiten zur Energieeffizienzsteigerung.

### Bezugszeichenliste

- 1: Zirkulationsleitung
- 2: Zirkulationsmittel
- 3: Einspeisestelle; Schnittstelle zur Einspeisung
- 4: Entnahmestelle; Schnittstelle zur Entnahme
- 5: Ultrafiltrationseinheit(en) (primär/sekundär)
- 6: Bypass-Leitung, Bypass, Nebenstromleitung, Primär-Bypass
- 7: Fördermittel
- 8: Einrichtung zur Erwärmung
- 9: Sekundär-Bypass
- S: Strömungsrichtung

## Patentansprüche

1. Verfahren zur Energieeinsparung im Rahmen der Bereitstellung einer erwärmten Flüssigkeit für Sanitärzwecke unter Kontrolle und Einhaltung der für Mikroorganismen zulässigen, empfohlenen oder akzeptablen Richtwerte, bei dem ein mit Ausnahme eines vorübergehenden Einspeisungs-, Entnahme- oder Wartungsvorganges geschlossenes Leitungssystem verwendet wird, welches eine Zirkulationsleitung (1) mit einem Zirkulationsmittel (2) und jeweils mindestens einer Schnittstelle zur Einspeisung (3) von Flüssigkeit in bzw. zur Entnahme (4) von Flüssigkeit aus dem System, eine einzige Ultrafiltrationseinheit (5) zur mechanischen Abscheidung von Mikroorganismen, und eine Bypass-Leitung (6), in deren Verlauf die einzige Ultrafiltrationseinheit (5) sowie ein Fördermittel (7) angeordnet sind, sowie eine Einrichtung zur Erwärmung (8), durch welche die Zirkulationsleitung (1) zur Erwärmung der in ihr geführten Flüssigkeit verläuft, umfasst, und bei dem die Soll-Temperatur für die Einrichtung zur Erwärmung (8) auf einen Wert zwischen 40 und 55°C eingestellt wird, wobei die Kontrolle und Einhaltung der Richtwerte erfolgt, indem die in der Zirkulationsleitung (1) geführte Flüssigkeit zumindest teilweise und zumindest zeitweise der in der Bypass-Leitung (6) angeordneten Ultrafiltrationseinheit (5) zugeführt wird.

2. Verfahren nach Anspruch 1, wobei die Bypass-Leitung (6) stromabwärts der Entnahmestelle (4) und somit zwischen der Entnahmestelle (4) und der Einspeisestelle (3) der Zirkulationsleitung (1) angeordnet ist.

3. Verfahren nach Anspruch 1 oder 2, wobei das Zirkulationsmittel (2) und/oder das Fördermittel (7) eine Pumpe ist.

4. Verfahren nach einem der vorhergehenden Ansprüche, wobei der Ultrafiltrationseinheit (5) ein Ablauf zur Ableitung von Spülflüssigkeit zugeordnet ist.

5. Verfahren nach einem der vorhergehenden Ansprüche, wobei das Leitungssystem ferner mindestens ein diagnostisches Mittel zur qualitativen und/oder quantitativen Bestimmung von Mikroorganismen in der Flüssigkeit umfasst.

6. Verfahren nach einem der vorhergehenden Ansprüche, wobei das Leitungssystem ferner Vorrichtungen umfasst, die aus der Gruppe bestehend aus Biosensoren, Trübungssensoren, Strömungssensoren, Drucksensoren, Sandfiltern, UV-Desinfektionseinheiten, Hitzebehandlungseinheiten, Beprobungsstellen, und Probeentnahmestellen ausgewählt sind.

7. Verfahren nach einem der vorhergehenden Ansprüche, wobei die Flüssigkeit der Ultrafiltrationseinheit (5) kontinuierlich oder diskontinuierlich zugeführt wird.

8. Verfahren nach einem der vorhergehenden Ansprüche, wobei eine quantitative und/oder qualitative Messung von Mikroorganismen in der Flüssigkeit kontinuierlich oder diskontinuierlich erfolgt.

9. Verfahren nach Anspruch 8, wobei die Messung periodisch in vorbestimmten Zeitintervallen oder programmgesteuert zu vorbestimmten Zeitpunkten erfolgt.

10. Verfahren nach Anspruch 8 oder 9, wobei die Zuführung der Flüssigkeit aus der Zirkulationsleitung (1) über die Bypass-Leitung (6) in die Ultrafiltrationseinheit (5) bedarfsgerecht in Abhängigkeit der erhaltenen Messdaten erfolgt.

## Claims

1. Method for energy saving in the course of providing a heated liquid for human consumption while controlling and complying with the limit values admissible, recommended or acceptable for microorganisms, wherein a piping system is used which, with the exception of a temporary feeding, withdrawal or maintenance operation, is closed and comprises a circulation piping (1) with a circulation means (2) and at least one point each for feeding (3) liquid into and for withdrawal (4) of liquid from the system, a single ultrafiltration unit (5) for the mechanical separation of microorganisms, and a bypass conduit (6) in the course of which the single ultrafiltration unit (5) and a conveyance means (7) are arranged, as well as a device for heating (8) through which the circulation piping (1) runs for heating the liquid guided therein, and wherein the set temperature for the heating device (8) is adjusted to a value between 40 and 55°C, wherein the control and compliance of the limit values is performed by at least partially and at least temporally directing the liquid being guided in the circulation piping (1) to the ultrafiltration unit (5) arranged in the bypass conduit (6).

2. Method according to claim 1, wherein the bypass conduit (6) is arranged downstream of the point of withdrawal (4) and thus between the point of withdrawal (4) and the point of feeding-in (3) of the circulation piping (1).

3. Method according to claim 1 or 2, wherein the circulation means (2) and/or the conveyance means (7) is a pump.

4. Method according to any of the preceding claims, wherein the ultrafiltration unit (5) comprises an outlet for the disposal of cleaning liquid.

5. Method according to any of the preceding claims, wherein the piping system further comprises at least one diagnostic means for the qualitative and/or quantitative determination of microorganisms in the liquid.

6. Method according to any of the preceding claims, wherein the piping system further comprises devices selected from the group consisting of biosensors, turbidity sensors, streaming sensors, pressure sensors, sand filters, UV-disinfector units, heat treatment units, inoculation points, and sampling points.

7. Method according to any of the preceding claims, wherein the liquid is channeled to the ultrafiltration unit (5) continuously or discontinuously.

8. Method according to any of the preceding claims, wherein a quantitative and/or qualitative measuring of microorganisms in the liquid is performed continuously or discontinuously.

9. Method according to claim 8, wherein the measuring is performed periodically in predetermined time intervals or program-controlled at predetermined time points.

10. Method according to claim 8 or 9, wherein the feeding of the liquid from the circulation piping (1) via the bypass conduit (6) into the ultrafiltration unit (5) is performed on demand in dependence of the measuring data obtained.

## Revendications

1. Procédé pour économiser de l'énergie lors de l'approvisionnement en eau chaude sanitaire en contrôlant et en respectant le seuil de référence autorisés, conseillés ou acceptables pour les microorganismes, dans lequel on utilise une installation fermée, sauf en cas d'opérations transitoires d'alimentation, de soutirage ou de maintenance, laquelle comprend une conduite de circulation (1) pourvue d'un élément permettant la circulation (2) et au moins un raccord pour l'alimentation (3) en liquide, et au moins un raccord pour le soutirage (4) de liquide, une unité d'ultrafiltration (5) unique pour la séparation mécanique des microorganismes, et une conduite de dérivation (6) sur laquelle se situent l'unique unité d'ultrafiltration (5) ainsi qu'un transporteur (7), ainsi que d'un dispositif de chauffage (8) à travers lequel passe la conduite de circulation (1) pour chauffer le liquide qu'elle contient, et dans lequel la température de consigne pour le dispositif de chauffage (8) est réglée à une valeur comprise entre 40 et 55°C, le contrôle et la conformité au seuil de référence étant assurés par le passage, au moins en partie et au moins transitoirement, du liquide contenu dans la conduite de circulation (1) dans l'unité d'ultrafiltration (5) localisée sur la conduite de dérivation (6).

2. Procédé selon la revendication 1, dans lequel la conduite de dérivation (6) est localisée en aval du raccord de soutirage (4) et donc entre le raccord de soutirage (4) et le raccord d'alimentation (3) de la conduite de circulation (1) .

3. Procédé selon les revendications 1 ou 2, dans lequel l'élément permettant la circulation (2) et/ou le transporteur (7) est une pompe.

4. Procédé selon une des revendications précédentes, dans lequel l'unité d'ultrafiltration est pourvue d'un conduit d'écoulement pour le rejet d'un liquide de lavage.

5. Procédé selon une des revendications précédentes, dans lequel l'installation comprend de plus au moins un moyen diagnostique pour la détermination qualitative et/ou quantitative de microorganismes dans le liquide.

6. Procédé selon une des revendications précédentes, dans lequel l'installation comprend de plus des dispositifs sélectionnés dans le groupe composé de bio-senseurs, des senseurs de turbidité, des senseurs de courant, des senseurs de pression, des filtres à sable, des unités de désinfection par UV, des unités de traitement thermique, des points d'échantillonnage, et des points de prélèvement d'échantillons.

7. Procédé selon une des revendications précédentes, dans lequel le liquide est amené de manière continue ou discontinue à l'unité d'ultrafiltration (5).

8. Procédé selon une des revendications précédentes, dans lequel une mesure quantitative et/ou qualitative de microorganismes dans le liquide est effectuée de manière continue ou discontinue.

9. Procédé selon la revendication 8, dans lequel la mesure est effectuée périodiquement selon des intervalles de temps prédéterminés ou sous contrôle d'une commande programmable à des intervalles de temps prédéterminés.

10. Procédé selon les revendications 8 ou 9, dans lequel l'apport de liquide provenant de la conduite de circulation (1), passant par la conduite de dérivation (7), dans l'unité d'ultrafiltration (5) se produit selon les besoins déterminés par les mesures effectuées.
